# EUROPÄISCHE PATENTANMELDUNG

(11) **EP 4 779 108 A1**
(43) Veröffentlichungstag der Anmeldung: **22.07.2026**
(21) Anmeldenummer: 25152695.0
(22) Anmeldetag: 17.01.2025
(51) Int. Cl.: E04G 21/32, E04G 21/18, E04G 15/06, F16B 7/04, B29C 45/44

(54) **ANKERHÜLSE ZUM EINBETONIEREN UND FESTHALTEN EINES SCHUTZGELÄNDERHALTERS, ANKERSYSTEM DAMIT UND SPRITZGUSSVERFAHREN ZUM HERSTELLEN EINER SOLCHEN ANKERHÜLSE**

(71) Anmelder: Albanese, Pino, 8400 Winterthur (CH)
(72) Erfinder: Albanese, Pino, 8400 Winterthur (CH)
(74) Vertreter: Gachnang AG Patentanwälte

(57) **Zusammenfassung**

Die Erfindung betrifft eine Ankerhülse (1) zum Einbetonieren. Die Ankerhülse (1) ist dazu ausgelegt im einbetonierten Zustand einen Schutzgeländerhalter (2), der eine Eingriffsvorrichtung (27) aufweist, festzuhalten. Die Ankerhülse (1) hat eine geschlossene Ankerhülsenwand (3), einen Ankerhülsenboden (4), der die Ankerhülse (1) einseitig schliesst, und eine hülsenförmige Aufnahme (5) innerhalb der Ankerhülse (1). Die Ankerhülse (1) ist dazu ausgelegt und so geformt, dass der Schutzgeländerhalter (2) in einer Steckrichtung (7) in die hülsenförmige Aufnahme (5) der einbetonierten Ankerhülse (1) steckbar ist.

## Beschreibung

Die Erfindung betrifft eine Ankerhülse zum Einbetonieren, die dazu ausgelegt ist im einbetonierten Zustand einen eine Eingriffsvorrichtung aufweisenden Schutzgeländerhalter festzuhalten. Die Erfindung betrifft auch ein Spritzgussverfahren zum Herstellen einer solchen Ankerhülse.

Um einen Absturz von Personen beim Erstellen einer Baute zu verhindern, werden erhöhte Randbereiche der Baute mit Schutzgeländern gesichert. Ein solches Schutzgeländer umfasst in der Baute, typischerweise in einem Boden der Baute, gehaltene bzw. verankerte, sich vertikal erstreckende Schutzgeländerhalter mit Lattenhalter und Latten. Zur Befestigung der Schutzgeländerhalter können in die Baute, typischerweise in einen Boden der Baute, am zu sichernden Randbereich und entlang des zu sichernden Randbereichs in Abständen Ankerhülsen einbetoniert sein. In jede einbetonierte Ankerhülse ist jeweils ein Schutzgeländerhalter gesteckt, der von der einbetonierten Ankerhülse vertikal gehalten bzw. vertikal in der Baute, typischerweise in einem Boden der Baute, verankert ist. Die Bereiche zwischen den Schutzgeländerhaltern sind von den Latten, die von den Lattenhaltern quer zu den Schutzgeländerhaltern gehalten sind, gefüllt. Dadurch ist der Durchgang durch die Bereiche zwischen den Schutzgeländerhaltern gesperrt und der Randbereich der Baute gesichert.

Was fehlt ist eine einbetonierbare Ankerhülse, die ein einfaches und sicheres Halten bzw. Verankern eines Schutzgeländerhalters darin und in einer Baute ermöglicht.

Es ist somit eine Aufgabe der Erfindung eine solche Ankerhülse bereitzustellen. Des Weiteren ist es eine Aufgabe der Erfindung ein Verfahren zur Herstellung einer solchen Ankerhülse bereitzustellen.

Die Aufgabe wird gelöst durch eine Ankerhülse gemäss den Merkmalen des Anspruchs 1 und durch ein Spritzgussverfahren gemäss den Merkmalen des Anspruchs 19. Die jeweiligen abhängigen Ansprüche betreffen bevorzugte Ausführungsformen der Ankerhülse bzw. des Verfahrens.

Die Erfindung betrifft eine Ankerhülse zum Einbetonieren. Die Ankerhülse ist dazu ausgelegt im einbetonierten Zustand einen Schutzgeländerhalter, der eine Eingriffsvorrichtung aufweist, festzuhalten.

Die Ankerhülse hat eine geschlossene Ankerhülsenwand, einen Ankerhülsenboden, der die Ankerhülse einseitig schliesst, und eine hülsenförmige Aufnahme innerhalb der Ankerhülse.

Die Ankerhülse ist dazu ausgelegt und so geformt, dass der Schutzgeländerhalter in einer Steckrichtung in die hülsenförmige Aufnahme der einbetonierten Ankerhülse steckbar ist.

Die hülsenförmige Aufnahme weist ein einzubetonierendes Formschlusselement auf, das dazu ausgelegt und so geformt ist, dass in einem Zustand, in dem der Schutzgeländerhalter in die hülsenförmige Aufnahme der einbetonierten Ankerhülse gesteckt ist, der Schutzgeländerhalter entgegen der Steckrichtung von der Ankerhülse durch ein Zusammenwirken der Eingriffsvorrichtung mit dem Formschlusselement formschlüssig festhaltbar ist.

Die Eingriffsvorrichtung kann ein Eingriffselement aufweisen, das dazu ausgelegt ist in das Formschlusselement, beispielsweise durch Einrasten, formschlüssig einzugreifen. Die Eingriffsvorrichtung kann einen Drücker aufweisen durch dessen Betätigung das in das Formschlusselement formschlüssig eingreifende Eingriffselement aus dem Eingriff, beispielsweise aus der Einrastung, lösbar ist.

Die geschlossene Ankerhülsenwand ist eine Wand, die beim Einbetonieren der Ankerhülse flüssigen Beton davon abhält in die hülsenförmige Aufnahme innerhalb der Ankerhülse zu fliessen.

Der Ankerhülsenboden ist ein Boden, der beim Einbetonieren der Ankerhülse flüssigen Beton davon abhält in die hülsenförmige Aufnahme innerhalb der Ankerhülse zu fliessen.

Die Ankerhülse und die hülsenförmige Aufnahme können beide jeweils länglich ausgebildet sein, bzw. sich jeweils entlang einer jeweiligen Längsrichtung erstrecken.

Die Steckrichtung kann parallel zur Längsrichtung der hülsenförmigen Aufnahme sein.

Das einzubetonierende Formschlusselement ist an einer Stelle der Ankerhülse ausgebildet, die beim Einbetonieren der Ankerhülse einbetoniert wird.

Die Ankerhülse kann dazu ausgelegt sein, dass diese mit ihrer Längsrichtung quer zur Oberfläche der Baute in diese einzubetonieren ist. Die Ankerhülse kann dazu ausgelegt sein, dass die Ankerhülse bündig zur Oberfläche der Baute in diese einzubetonieren ist.

Die Eingriffsvorrichtung kann beispielsweise durch formschlüssiges Einrasten der Eingriffsvorrichtung oder eines Eingriffselements der Eingriffsvorrichtung mit dem Formschlusselement zusammenwirken, wodurch der in die Aufnahme der einbetonierten Ankerhülse gesteckte Schutzgeländerhalter entgegen der Steckrichtung von der Ankerhülse formschlüssig festhaltbar ist.

Es wurde erkannt, dass eine formschlüssige Verbindung von einem Schutzgeländerhalter mit einer Ankerhülse ein einfaches und sicheres Halten bzw. Verankern des Schutzgeländerhalters in der Ankerhülse ermöglicht.

Die darauf basierende erfindungsgemässe Ankerhülse ist einbetonierbar und ermöglicht eine formschlüssige Verbindbarkeit eines Schutzgeländerhalters mit der Ankerhülse und dadurch ein einfaches und sicheres Halten bzw. Verankern eines Schutzgeländerhalters darin und in einer Baute.

Gemäss einer Ausführungsform ist die Ankerhülse ein Spritzgussteil, das durch Spritzgiessen in einer Spritzgussform mit einem Einfallkern hergestellt ist, wobei die hülsenförmige Aufnahme und das einzubetonierende Formschlusselement vom Einfallkern geformt sind und die Ankerhülse einstückig, insbesondere und nahtlos, ausgebildet ist.

Die Ankerhülse kann ein Kunststoffspritzgussteil sein. Das Kunststoffspritzgussteil kann ein glasfaserverstärktes Kunststoffspritzgussteil sein.

Dadurch, dass die hülsenförmige Aufnahme und das einzubetonierende Formschlusselement vom Einfallkern geformt sind ist die Ankerhülse einstückig, insbesondere und nahtlos. D.h. das Formen der hülsenförmigen Aufnahme und des einzubetonierenden Formschlusselements durch den Einfallkern resultiert darin, dass die Ankerhülse einstückig, insbesondere und nahtlos, ist.

Einstückig bedeutet, dass alle Elemente der Ankerhülse einstückig miteinander verbunden sind, d.h. aus einem Guss gefertigt sind. D.h. die Ankerhülse umfasst keine mittels Fügetechnik zusammengefügten bzw. mittels Fügetechnik miteinander verbundenen Teile.

Nahtlos bedeutet, dass beim Spritzgiessen keine Situation entsteht in der zwei Gussfronten oder Gussströme zusammentreffen und eine Naht bilden. Ein solche Naht kann von Auge erkennbar sein und/oder ertastbar sein. Eine solche Naht wird auch als Bindenaht bezeichnet. Eine solche Naht kann die strukturelle Integrität bzw. die mechanischen Eigenschaften eines Spritzgussteils wesentlich beeinträchtigen.

Dadurch ist eine hochfeste Ankerhülse bereitstellbar, die ein sicheres Halten einer Schutzgeländerhalterung ermöglicht.

Gemäss einer Ausführungsform ist in einem Zustand, in dem der Schutzgeländerhalter in die hülsenförmige Aufnahme der einbetonierten Ankerhülse gesteckt ist, der Schutzgeländerhalter in Drehrichtungen quer zur Steckrichtung von der Ankerhülse formschlüssig festhaltbar.

Dadurch ist ein Schutzgeländerhalter verdrehsicher von der Ankerhülse haltbar. Dies kann beispielsweise das Befestigen von Latten am Schutzgeländerhalter erleichtern.

Gemäss einer Ausführungsform ist ein, insbesondere vom Ankerhülsenboden und vom dem Ankerhülsenboden abgewandten Ankerhülsenende beabstandeter, Abschnitt der geschlossenen Ankerhülsenwand zum einzubetonierenden Formschlusselement geformt.

Gemäss einer Ausführungsform ist das Formschlusselement eine, insbesondere rechteckige, Ausbuchtung, die sich quer zur Steckrichtung nach aussen erstreckt.

Gemäss einer Ausführungsform weist das Formschlusselement eine erste Kante, insbesondere erste Fläche, die sich quer zur Steckrichtung erstreckt, auf, sodass in einem Zustand, in dem der Schutzgeländerhalter in die hülsenförmige Aufnahme der einbetonierten Ankerhülse gesteckt ist, der Schutzgeländerhalter durch die erste Kante, insbesondere die erste Fläche, entgegen der Steckrichtung von der Ankerhülse formschlüssig festhaltbar ist.

Gemäss einer Ausführungsform hat die Ankerhülse und dadurch die hülsenförmige Aufnahme einen eckigen, insbesondere rechteckigen oder quadratischen, Querschnitt und ist so geformt, dass in einem Zustand, in dem der Schutzgeländerhalter in die hülsenförmige Aufnahme der einbetonierten Ankerhülse gesteckt ist, ein in die hülsenförmige Aufnahme der einbetonierten Ankerhülse gesteckter eckiger, insbesondere rechteckiger oder quadratischer, Abschnitt des Schutzgeländerhalters in die Drehrichtungen quer zur Steckrichtung von der Ankerhülse formschlüssig festhaltbar ist.

Gemäss einer Ausführungsform weist das Formschlusselement eine zweite Kante, insbesondere zweite Fläche, die sich quer zu den Drehrichtungen erstreckt auf, sodass in einem Zustand, in dem der Schutzgeländerhalter in die hülsenförmige Aufnahme der einbetonierten Ankerhülse gesteckt ist, der Schutzgeländerhalter durch die zweite Kante, insbesondere die zweite Fläche, in die Drehrichtungen quer zur Steckrichtung von der Ankerhülse formschlüssig festhaltbar ist.

Gemäss einer Ausführungsform hat die Ankerhülse und dadurch die hülsenförmige Aufnahme einen runden Querschnitt.

Die ermöglicht das Halten von Schutzgeländerhaltern mit einem runden Querschnitt.

Gemäss einer Ausführungsform ist an der Ankerhülse ein Deckel zum Schliessen der Ankerhülse, sodass die Ankerhülse beidseitig geschlossen ist, befestigt, insbesondere wobei am Deckel eine sich quer, insbesondere orthogonal, vom Deckel weg erstreckende Schlaufe angeformt ist.

Der Deckel kann durch ein filmscharnierartiges Element an der Ankerhülse befestigt sein. Der Deckel und das filmscharnierartige Element können einstückig, insbesondere und nahtlos, mit der Ankerhülse verbunden sein.

Die Schlaufe kann einstückig, insbesondere und nahtlos, mit dem Deckel verbunden sein. Beim Einbetonieren der Ankerhülse ist die Ankerhülse mit dem Deckel verschlossen. Ist der Beton ausgehärtet wird der Deckel entfernt, sodass ein Schutzgeländerhalter in die hülsenförmige Aufnahme steckbar ist. Dabei ist die Schlaufe dazu ausgelegt, beispielsweise durch Einhängen, gegriffen und gezogen zu werden, um das Entfernen des Deckels zu erleichtern. Die Schlaufe kann eine Eigensteifigkeit aufweisen, sodass die Schlaufe, in einem Zustand, in dem die Ankerhülse mit dem Deckel verschlossen ist, die Schlaufe sich in einer Richtung entgegen der Steckrichtung und quer zum Deckel erstreckt und vorsteht, sodass die Schlaufe einfach zugänglich und greifbar ist.

Gemäss einer Ausführungsform sind an der Ankerhülse hülsenförmige Nagelhalter zum Halten von Nägeln und Befestigen der Ankerhülse an einer Schalung durch Annageln mittels von den hülsenförmigen Nagelhaltern gehaltener Nägel, so ausgebildet, dass in einem Zustand, in dem die Nägel von den hülsenförmigen Nagelhaltern gehalten sind, die Nägel sich quer, insbesondere orthogonal, zur Steckrichtung erstrecken.

Dies ermöglicht die Befestigung der Ankerhülse an einer vertikalen Schalung, sodass bei der einbetonierten Ankerhülse die Steckrichtung parallel zur Vertikalen, bzw. Lotrechten, ist und die Ankerhülse als Bodenhülse einbetonierbar ist.

Gemäss einer Ausführungsform sind die hülsenförmigen Nagelhalter des Weiteren als Distanzhalter ausgebildet, sodass die hülsenförmige Aufnahme in einem Zustand, in dem die Ankerhülse mittels von den hülsenförmigen Nagelhaltern gehaltener Nägel an einer Schalung angenagelt ist, die Ankerhülse mit einem Abstand von mindestens 5 cm, insbesondere von mindestens 6 cm, zur Schalung an der Schalung befestigt ist.

Dies ermöglicht das kontrollierte Einbetonieren der Ankerhülse, sodass die Ankerhülse mit einem ausreichenden Abstand vom Rand der Baute einbetonierbar ist. Dadurch ist die einbetonierte Ankerhülse gegen seitliches Ausreissen, also mit der Ausreisskraft quer zur Steckrichtung, aus der Baute gesichert. Des Weiteren ermöglichen die Distanzhalter, dass zwischen der Ankerhülse, bzw. der hülsenförmigen Aufnahme, und der Schalung Armierungseisen, insbesondere quer zur Steckrichtung, verlegbar sind. Dadurch ist die einbetonierte Ankerhülse gegen seitliches Ausreissen sicherbar.

Gemäss einer Ausführungsform sind an der Ankerhülse hülsenförmige Armierungseisenhalter zum Halten von Armierungseisen und Erhöhen der Ausreissfestigkeit der einbetonierten Ankerhülse so ausgebildet, dass in einem Zustand, in dem die Armierungseisen von den hülsenförmigen Armierungseisenhaltern gehalten sind, die Armierungseisen sich quer, insbesondere orthogonal, zur Steckrichtung erstrecken.

Gemäss einer Ausführungsform ist aussen an der Ankerhülse eine Haltevorrichtung ausgebildet, die dazu ausgelegt ist, ein Montagehilfsmittel zur Montage der Ankerhülse an einer Bewehrung und zur Erhöhung der Ausreissfestigkeit der einbetonierten Ankerhülse formschlüssig an der Ankerhülse zu halten.

Das Montagehilfsmittel kann plattenförmig sein und Durchbrüche aufweisen. Die Durchbrüche können so angeordnet sein, dass das Montagehilfsmittel gitterartig ist.

Dies ermöglicht, dass an der Ankerhülse ein Montagehilfsmittel befestigbar ist. Das Montagehilfsmittel ist ein Hilfsmittel, das dazu ausgelegt ist an einer Bewehrung, bspw. mit Eisenbindern, befestigt zu werden. Durch die Befestigbarkeit des an der Ankerhülse befestigten Montagehilfsmittels ist die Ankerhülse an der Bewehrung positionierbar, ausrichtbar und befestigbar.

Gemäss einer Ausführungsform weist die Haltevorrichtung Stege, die sich in Steckrichtung und von der Ankerhülse weg erstrecken und Nuten in den Stegen auf, wobei die Nuten dazu ausgelegt sind, das Montagehilfsmittel in Steckrichtung und entgegen der Steckrichtung formschlüssig zu halten.

Dadurch ist die einbetoniert Ankerhülse, deren Nuten das Montagehilfsmittel formschlüssig halten, gegen ein Ausreissen der Ankerhülse entgegen der Steckrichtung gesichert.

Gemäss einer Ausführungsform ist das Montagehilfsmittel von der Haltevorrichtung formschlüssig an der Ankerhülse gehalten.

Das Montagehilfsmittel kann sich dabei quer zur Steckrichtung erstrecken.

Gemäss einer Ausführungsform ist das Montagehilfsmittel plattenförmig mit einem Loch und am Lochrand angeformten ringsegementförmigen Elementen, welche in den Nuten, insbesondere durch Einrasten, in Steckrichtung und entgegen der Steckrichtung formschlüssig gehalten sind.

Das Loch bildet eine Aufnahme für die Ankerhülse, durch die die Ankerhülse steckbar ist, sodass das Montagehilfsmittel aussen an der Ankerhülse von der Haltevorrichtung formschlüssig haltbar ist.

Gemäss einer Ausführungsform weist die Ankerhülse ein weiteres einzubetonierendes Formschlusselement auf, und weisen das einzubetonierende Formschlusselement und das weitere einzubetonierende Formschlusselement in Bezug auf die Mittenachse der hülsenförmigen Aufnahme einen Winkelabstand W, insbesondere von 90°, oder von 120°, oder von 180°, zueinander auf.

Dies ermöglicht, dass ein Schutzgeländerhalter in bestimmten Winkelpositionen in Bezug auf seine Längsachse, formschlüssig von der Ankerhülse haltbar ist.

Die Erfindung betrifft auch ein Spritzgussverfahren zum Herstellen einer erfindungsgemässen Ankerhülse mit den Schritten Bereitstellen einer die Ankerhülse formenden Spritzgussform mit einem Einfallkern, und Spritzgiessen der Ankerhülse. Dabei werden die hülsenförmige Aufnahme und das einzubetonierende Formschlusselement vom Einfallkern geformt, sodass die Ankerhülse einstückig, insbesondere und nahtlos, ausgebildet ist.

Dadurch sind auch die hülsenförmige Aufnahme und das einzubetonierende Formschlusselement einstückig, insbesondere und nahtlos, ausgebildet.

Die Erfindung betrifft auch ein Ankersystem mit einer erfindungsgemässen Ankerhülse und einem Schutzgeländerhalter, wobei der Schutzgeländerhalter eine betätigbare Eingriffsvorrichtung mit einem Eingriffselement, das durch Eingreifen am Formschlusselement mit diesem zusammenwirkt, aufweist, sodass der von der einbetonierten Ankerhülse formschlüssig festgehaltene Schutzgeländerhalter durch Betätigen der Eingriffsvorrichtung von der Ankerhülse trennbar ist.

Ein erster weiterer Aspekt der Erfindung betrifft eine Ankerhülse zum Einbetonieren, die dazu ausgelegt ist im einbetonierten Zustand einen eine Eingriffsvorrichtung aufweisenden Schutzgeländerhalter festzuhalten, mit einer geschlossenen Ankerhülsenwand, einem Ankerhülsenboden, der die Ankerhülse einseitig schliesst, und einer hülsenförmigen Aufnahme innerhalb der Ankerhülse, wobei die Ankerhülse dazu ausgelegt und so geformt ist, dass der Schutzgeländerhalter in einer Steckrichtung in die hülsenförmige Aufnahme der einbetonierten Ankerhülse steckbar ist, wobei die Ankerhülse ein Spritzgussteil ist, das durch Spritzgiessen in einer Spritzgussform mit einem Einfallkern hergestellt ist, wobei die hülsenförmige Aufnahme vom Einfallkern geformt ist und die Ankerhülse einstückig, insbesondere und nahtlos, ausgebildet ist.

Die Ankerhülse gemäss dem ersten weiteren Aspekt der Erfindung kann gemäss allen vorgängig beschriebenen Ausführungsformen der Ankerhülse ausgebildet sein, d.h. alle Merkmale/Elemente, Funktionen und Eigenschaften aufweisen gemäss den vorgängig beschriebenen Ausführungsformen der Ankerhülse. Alle vorgängig beschriebenen Effekte/Wirkungen zu den Merkmalen/Elementen der Ankerhülse, treffen in analoger Weise für die Ankerhülse gemäss dem ersten weiteren Aspekt der Erfindung zu.

Gemäss einer Ausführungsform des ersten weiteren Aspekts der Erfindung weist die hülsenförmige Aufnahme ein einzubetonierendes Formschlusselement auf, das dazu ausgelegt und so geformt ist, dass in einem Zustand, in dem der Schutzgeländerhalter in die hülsenförmige Aufnahme der einbetonierten Ankerhülse gesteckt ist, der Schutzgeländerhalter entgegen der Steckrichtung von der Ankerhülse durch ein Zusammenwirken der Eingriffsvorrichtung mit dem Formschlusselement formschlüssig festhaltbar ist, und ist das einzubetonierende Formschlusselement vom Einfallkern geformt.

Gemäss einer Ausführungsform des ersten weiteren Aspekts der Erfindung ist in einem Zustand, in dem der Schutzgeländerhalter in die hülsenförmige Aufnahme der einbetonierten Ankerhülse gesteckt ist, der Schutzgeländerhalter in Drehrichtungen quer zur Steckrichtung von der Ankerhülse formschlüssig festhaltbar.

Gemäss einer Ausführungsform des ersten weiteren Aspekts der Erfindung ist ein, insbesondere vom Ankerhülsenboden und vom dem Ankerhülsenboden abgewandten Ankerhülsenende beabstandeter, Abschnitt der geschlossenen Ankerhülsenwand zum einzubetonierenden Formschlusselement geformt.

Gemäss einer Ausführungsform des ersten weiteren Aspekts der Erfindung ist das Formschlusselement eine, insbesondere rechteckige, Ausbuchtung, die sich quer zur Steckrichtung nach aussen erstreckt.

Gemäss einer Ausführungsform des ersten weiteren Aspekts der Erfindung weist das Formschlusselement eine erste Kante, insbesondere erste Fläche, die sich quer zur Steckrichtung erstreckt, auf, sodass in einem Zustand, in dem der Schutzgeländerhalter in die hülsenförmige Aufnahme der einbetonierten Ankerhülse gesteckt ist, der Schutzgeländerhalter durch die erste Kante, insbesondere die erste Fläche, entgegen der Steckrichtung von der Ankerhülse formschlüssig festhaltbar ist.

Gemäss einer Ausführungsform des ersten weiteren Aspekts der Erfindung hat die Ankerhülse und dadurch die hülsenförmige Aufnahme einen eckigen, insbesondere rechteckigen oder quadratischen, Querschnitt und ist so geformt, dass in einem Zustand, in dem der Schutzgeländerhalter in die hülsenförmige Aufnahme der einbetonierten Ankerhülse gesteckt ist, ein in die hülsenförmige Aufnahme der einbetonierten Ankerhülse gesteckter eckiger, insbesondere rechteckiger oder quadratischer, Abschnitt des Schutzgeländerhalters in die Drehrichtungen quer zur Steckrichtung von der Ankerhülse formschlüssig festhaltbar ist.

Gemäss einer Ausführungsform des ersten weiteren Aspekts der Erfindung weist das Formschlusselement eine zweite Kante, insbesondere zweite Fläche, die sich quer zu den Drehrichtungen erstreckt auf, sodass in einem Zustand, in dem der Schutzgeländerhalter in die hülsenförmige Aufnahme der einbetonierten Ankerhülse gesteckt ist, der Schutzgeländerhalter durch die zweite Kante, insbesondere die zweite Fläche, in die Drehrichtungen quer zur Steckrichtung von der Ankerhülse formschlüssig festhaltbar ist.

Gemäss einer Ausführungsform des ersten weiteren Aspekts der Erfindung hat die Ankerhülse und dadurch die hülsenförmige Aufnahme einen runden Querschnitt.

Gemäss einer Ausführungsform des ersten weiteren Aspekts der Erfindung ist an der Ankerhülse ein Deckel zum Schliessen der Ankerhülse, sodass die Ankerhülse beidseitig geschlossen ist, befestigt, insbesondere wobei am Deckel eine sich quer, insbesondere orthogonal, vom Deckel weg erstreckende Schlaufe angeformt ist.

Gemäss einer Ausführungsform des ersten weiteren Aspekts der Erfindung sind an der Ankerhülse hülsenförmige Nagelhalter zum Halten von Nägeln und Befestigen der Ankerhülse an einer Schalung durch Annageln mittels von den hülsenförmigen Nagelhaltern gehaltener Nägel, so ausgebildet, dass in einem Zustand, in dem die Nägel von den hülsenförmigen Nagelhaltern gehalten sind, die Nägel sich quer, insbesondere orthogonal, zur Steckrichtung erstrecken.

Gemäss einer Ausführungsform des ersten weiteren Aspekts der Erfindung sind die hülsenförmigen Nagelhalter des Weiteren als Distanzhalter ausgebildet, sodass die hülsenförmige Aufnahme in einem Zustand, in dem die Ankerhülse mittels von den hülsenförmigen Nagelhaltern gehaltener Nägel an einer Schalung angenagelt ist, die Ankerhülse mit einem Abstand von mindestens 5 cm, insbesondere von mindestens 6 cm, zur Schalung an der Schalung befestigt ist.

Gemäss einer Ausführungsform des ersten weiteren Aspekts der Erfindung sind an der Ankerhülse hülsenförmige Armierungseisenhalter zum Halten von Armierungseisen und Erhöhen der Ausreissfestigkeit der einbetonierten Ankerhülse so ausgebildet, dass in einem Zustand, in dem die Armierungseisen von den hülsenförmigen Armierungseisenhaltern gehalten sind, die Armierungseisen sich quer, insbesondere orthogonal, zur Steckrichtung erstrecken.

Gemäss einer Ausführungsform des ersten weiteren Aspekts der Erfindung ist aussen an der Ankerhülse eine Haltevorrichtung ausgebildet, die dazu ausgelegt ist, ein Montagehilfsmittel zur Montage der Ankerhülse an einer Bewehrung und zur Erhöhung der Ausreissfestigkeit der einbetonierten Ankerhülse formschlüssig an der Ankerhülse zu halten.

Gemäss einer Ausführungsform des ersten weiteren Aspekts der Erfindung weist die Haltevorrichtung Stege, die sich in Steckrichtung und von der Ankerhülse weg erstrecken und Nuten in den Stegen auf, wobei die Nuten dazu ausgelegt sind, das Montagehilfsmittel in Steckrichtung und entgegen der Steckrichtung formschlüssig zu halten.

Gemäss einer Ausführungsform des ersten weiteren Aspekts der Erfindung ist das Montagehilfsmittel von der Haltevorrichtung formschlüssig an der Ankerhülse gehalten.

Gemäss einer Ausführungsform des ersten weiteren Aspekts der Erfindung ist das Montagehilfsmittel plattenförmig mit einem Loch und am Lochrand angeformten ringsegementförmigen Elementen, welche in den Nuten, insbesondere durch Einrasten, in Steckrichtung und entgegen der Steckrichtung formschlüssig gehalten sind.

Gemäss einer Ausführungsform des ersten weiteren Aspekts der Erfindung weist die Ankerhülse ein weiteres einzubetonierendes Formschlusselement auf, und weisen das einzubetonierende Formschlusselement und das weitere einzubetonierende Formschlusselement in Bezug auf die Mittenachse der hülsenförmigen Aufnahme einen Winkelabstand W, insbesondere von 90°, oder von 120°, oder von 180°, zueinander auf.

Ein zweiter weiterer Aspekt der Erfindung betrifft eine Ankerhülse zum Einbetonieren, die dazu ausgelegt ist im einbetonierten Zustand einen eine Eingriffsvorrichtung aufweisenden Schutzgeländerhalter festzuhalten, mit einer geschlossenen Ankerhülsenwand, einem Ankerhülsenboden, der die Ankerhülse einseitig schliesst, und einer hülsenförmigen Aufnahme innerhalb der Ankerhülse, wobei die Ankerhülse dazu ausgelegt und so geformt ist, dass der Schutzgeländerhalter in einer Steckrichtung in die hülsenförmige Aufnahme der einbetonierten Ankerhülse steckbar ist, wobei ein Montagehilfsmittel zur Montage der Ankerhülse an einer Bewehrung und zur Erhöhung der Ausreissfestigkeit der einbetonierten Ankerhülse formschlüssig an der Ankerhülse gehalten ist.

Die Ankerhülse gemäss dem zweiten weiteren Aspekt der Erfindung kann gemäss allen vorgängig beschriebenen Ausführungsformen der Ankerhülse ausgebildet sein, d.h. alle Merkmale/Elemente, Funktionen und Eigenschaften aufweisen gemäss den vorgängig beschriebenen Ausführungsformen der Ankerhülse. Alle vorgängig beschriebenen Effekte/Wirkungen zu den Merkmalen/Elementen der Ankerhülse, treffen in analoger Weise für die Ankerhülse gemäss dem zweiten weiteren Aspekt der Erfindung zu.

Gemäss einer Ausführungsform des zweiten weiteren Aspekts der Erfindung weist die hülsenförmige Aufnahme ein einzubetonierendes Formschlusselement auf, das dazu ausgelegt und so geformt ist, dass in einem Zustand, in dem der Schutzgeländerhalter in die hülsenförmige Aufnahme der einbetonierten Ankerhülse gesteckt ist, der Schutzgeländerhalter entgegen der Steckrichtung von der Ankerhülse durch ein Zusammenwirken der Eingriffsvorrichtung mit dem Formschlusselement formschlüssig festhaltbar ist, und ist das einzubetonierende Formschlusselement vom Einfallkern geformt.

Gemäss einer Ausführungsform des zweiten weiteren Aspekts der Erfindung ist in einem Zustand, in dem der Schutzgeländerhalter in die hülsenförmige Aufnahme der einbetonierten Ankerhülse gesteckt ist, der Schutzgeländerhalter in Drehrichtungen quer zur Steckrichtung von der Ankerhülse formschlüssig festhaltbar.

Gemäss einer Ausführungsform des zweiten weiteren Aspekts der Erfindung ist ein, insbesondere vom Ankerhülsenboden und vom dem Ankerhülsenboden abgewandten Ankerhülsenende beabstandeter, Abschnitt der geschlossenen Ankerhülsenwand zum einzubetonierenden Formschlusselement geformt.

Gemäss einer Ausführungsform des zweiten weiteren Aspekts der Erfindung ist das Formschlusselement eine, insbesondere rechteckige, Ausbuchtung, die sich quer zur Steckrichtung nach aussen erstreckt.

Gemäss einer Ausführungsform des zweiten weiteren Aspekts der Erfindung weist das Formschlusselement eine erste Kante, insbesondere erste Fläche, die sich quer zur Steckrichtung erstreckt, auf, sodass in einem Zustand, in dem der Schutzgeländerhalter in die hülsenförmige Aufnahme der einbetonierten Ankerhülse gesteckt ist, der Schutzgeländerhalter durch die erste Kante, insbesondere die erste Fläche, entgegen der Steckrichtung von der Ankerhülse formschlüssig festhaltbar ist.

Gemäss einer Ausführungsform des zweiten weiteren Aspekts der Erfindung hat die Ankerhülse und dadurch die hülsenförmige Aufnahme einen eckigen, insbesondere rechteckigen oder quadratischen, Querschnitt und ist so geformt, dass in einem Zustand, in dem der Schutzgeländerhalter in die hülsenförmige Aufnahme der einbetonierten Ankerhülse gesteckt ist, ein in die hülsenförmige Aufnahme der einbetonierten Ankerhülse gesteckter eckiger, insbesondere rechteckiger oder quadratischer, Abschnitt des Schutzgeländerhalters in die Drehrichtungen quer zur Steckrichtung von der Ankerhülse formschlüssig festhaltbar ist.

Gemäss einer Ausführungsform des zweiten weiteren Aspekts der Erfindung weist das Formschlusselement eine zweite Kante, insbesondere zweite Fläche, die sich quer zu den Drehrichtungen erstreckt auf, sodass in einem Zustand, in dem der Schutzgeländerhalter in die hülsenförmige Aufnahme der einbetonierten Ankerhülse gesteckt ist, der Schutzgeländerhalter durch die zweite Kante, insbesondere die zweite Fläche, in die Drehrichtungen quer zur Steckrichtung von der Ankerhülse formschlüssig festhaltbar ist.

Gemäss einer Ausführungsform des zweiten weiteren Aspekts der Erfindung hat die Ankerhülse und dadurch die hülsenförmige Aufnahme einen runden Querschnitt.

Gemäss einer Ausführungsform des zweiten weiteren Aspekts der Erfindung ist an der Ankerhülse ein Deckel zum Schliessen der Ankerhülse, sodass die Ankerhülse beidseitig geschlossen ist, befestigt, insbesondere wobei am Deckel eine sich quer, insbesondere orthogonal, vom Deckel weg erstreckende Schlaufe angeformt ist.

Gemäss einer Ausführungsform des zweiten weiteren Aspekts der Erfindung sind an der Ankerhülse hülsenförmige Nagelhalter zum Halten von Nägeln und Befestigen der Ankerhülse an einer Schalung durch Annageln mittels von den hülsenförmigen Nagelhaltern gehaltener Nägel, so ausgebildet, dass in einem Zustand, in dem die Nägel von den hülsenförmigen Nagelhaltern gehalten sind, die Nägel sich quer, insbesondere orthogonal, zur Steckrichtung erstrecken.

Gemäss einer Ausführungsform des zweiten weiteren Aspekts der Erfindung sind die hülsenförmigen Nagelhalter des Weiteren als Distanzhalter ausgebildet, sodass die hülsenförmige Aufnahme in einem Zustand, in dem die Ankerhülse mittels von den hülsenförmigen Nagelhaltern gehaltener Nägel an einer Schalung angenagelt ist, die Ankerhülse mit einem Abstand von mindestens 5 cm, insbesondere von mindestens 6 cm, zur Schalung an der Schalung befestigt ist.

Gemäss einer Ausführungsform des zweiten weiteren Aspekts der Erfindung sind an der Ankerhülse hülsenförmige Armierungseisenhalter zum Halten von Armierungseisen und Erhöhen der Ausreissfestigkeit der einbetonierten Ankerhülse so ausgebildet, dass in einem Zustand, in dem die Armierungseisen von den hülsenförmigen Armierungseisenhaltern gehalten sind, die Armierungseisen sich quer, insbesondere orthogonal, zur Steckrichtung erstrecken.

Gemäss einer Ausführungsform des zweiten weiteren Aspekts der Erfindung ist aussen an der Ankerhülse eine Haltevorrichtung ausgebildet, die dazu ausgelegt ist, das Montagehilfsmittel formschlüssig an der Ankerhülse zu halten.

Gemäss einer Ausführungsform des zweiten weiteren Aspekts der Erfindung weist die Haltevorrichtung Stege, die sich in Steckrichtung und von der Ankerhülse weg erstrecken und Nuten in den Stegen auf, wobei die Nuten dazu ausgelegt sind, das Montagehilfsmittel in Steckrichtung und entgegen der Steckrichtung formschlüssig zu halten.

Gemäss einer Ausführungsform des zweiten weiteren Aspekts der Erfindung ist das Montagehilfsmittel von der Haltevorrichtung formschlüssig an der Ankerhülse gehalten.

Gemäss einer Ausführungsform des zweiten weiteren Aspekts der Erfindung ist das Montagehilfsmittel plattenförmig mit einem Loch und am Lochrand angeformten ringsegementförmigen Elementen, welche in den Nuten, insbesondere durch Einrasten, in Steckrichtung und entgegen der Steckrichtung formschlüssig gehalten sind.

Gemäss einer Ausführungsform des zweiten weiteren Aspekts der Erfindung weist die Ankerhülse ein weiteres einzubetonierendes Formschlusselement auf, und weisen das einzubetonierende Formschlusselement und das weitere einzubetonierende Formschlusselement in Bezug auf die Mittenachse der hülsenförmigen Aufnahme einen Winkelabstand W, insbesondere von 90°, oder von 120°, oder von 180°, zueinander auf.

Die erfindungsgemässe Ankerhülse ist im Folgenden rein beispielhaft anhand konkreter in den Figuren dargestellter Ausführungsformen näher beschrieben. Es zeigen:
- Figur 1: einen Schutzgeländerhalter (links) und eine Ankerhülse (Mitte) mit Schnittansicht (rechts) dazu;
- Figur 2: eine Seitenansicht einer Ankerhülse in einem Zustand, in dem die Ankerhülse an einer Schalung angenagelt ist;
- Figur 3: eine Ankerhülse (links) und eine Schnittansicht (rechts) dazu;
- Figur 4: eine Seitenansicht einer Ankerhülse in einem Zustand, in dem die Ankerhülse an einer Schalung angenagelt ist; und
- Figur 5: ein Montagehilfsmittel zu den Ankerhülsen der Figuren 1 bis 4.

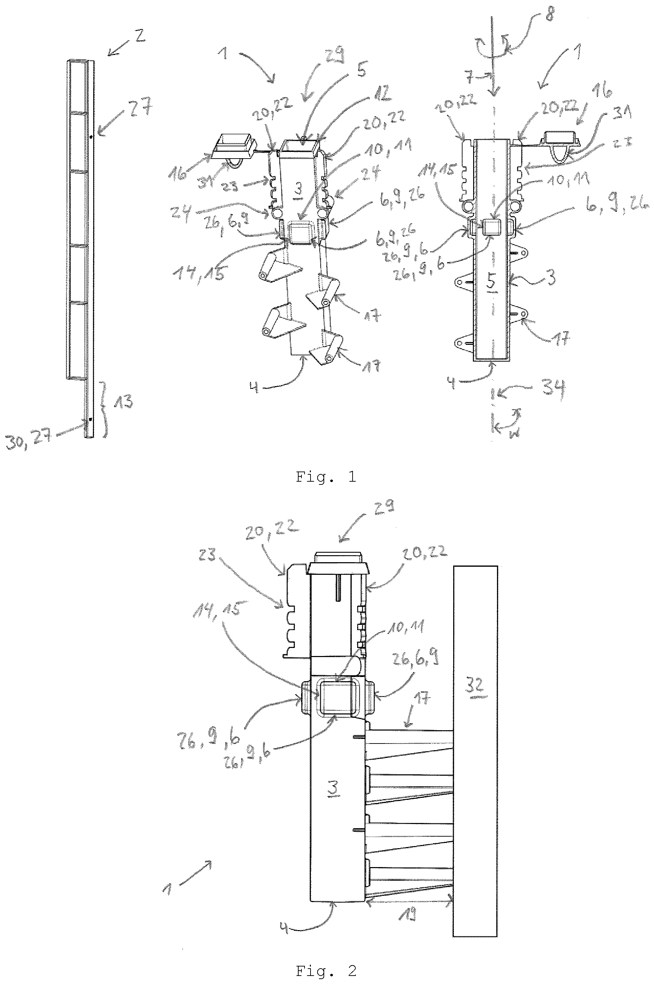

Figuren 1 und 2 zeigen jeweils eine Ankerhülse 1 zum Einbetonieren. Die Ankerhülse 1 ist dazu ausgelegt im einbetonierten Zustand einen Schutzgeländerhalter 2, der eine Eingriffsvorrichtung 27 aufweist, festzuhalten.

Die Ankerhülse 1 hat eine geschlossene Ankerhülsenwand 3, einen Ankerhülsenboden 4, der die Ankerhülse 1 einseitig schliesst, und eine hülsenförmige Aufnahme 5 innerhalb der Ankerhülse 1.

Die Ankerhülse 1 ist dazu ausgelegt und so geformt, dass der Schutzgeländerhalter 2 in einer Steckrichtung 7 in die hülsenförmige Aufnahme 5 der einbetonierten Ankerhülse 1 steckbar ist.

Die hülsenförmige Aufnahme 5 weist ein einzubetonierendes Formschlusselement 6 auf, das dazu ausgelegt und so geformt ist, dass in einem Zustand, in dem der Schutzgeländerhalter 2 in die hülsenförmige Aufnahme 5 der einbetonierten Ankerhülse 1 gesteckt ist, der Schutzgeländerhalter 2 entgegen der Steckrichtung 7 von der Ankerhülse 1 durch ein Zusammenwirken der Eingriffsvorrichtung 27 mit dem Formschlusselement 6 formschlüssig festhaltbar ist.

Die Ankerhülse 1 ist ein Spritzgussteil, das durch Spritzgiessen in einer Spritzgussform mit einem Einfallkern hergestellt ist, wobei die hülsenförmige Aufnahme 5 und das einzubetonierende Formschlusselement 6 vom Einfallkern geformt sind und die Ankerhülse 1 einstückig und nahtlos ausgebildet ist.

Ein in die hülsenförmige Aufnahme 5 der einbetonierten Ankerhülse 1 gesteckter Schutzgeländerhalter 2 ist in Drehrichtungen 8 quer zur Steckrichtung 7 von der Ankerhülse 1 formschlüssig festhaltbar.

Ein vom Ankerhülsenboden 4 und vom dem Ankerhülsenboden 4 abgewandten Ankerhülsenende beabstandeter Abschnitt der geschlossenen Ankerhülsenwand 3 ist zum einzubetonierenden Formschlusselement 6 geformt.

Das Formschlusselement 6 ist eine rechteckige Ausbuchtung 9, die sich quer zur Steckrichtung 7 nach aussen erstreckt.

Das Formschlusselement 6 weist eine erste Kante 10 und erste Fläche 11, die sich quer zur Steckrichtung 7 erstrecken, auf, sodass in einem Zustand, in dem der Schutzgeländerhalter 2 in die hülsenförmige Aufnahme 5 der einbetonierten Ankerhülse 1 gesteckt ist, der Schutzgeländerhalter 2 durch die erste Kante 10 bzw. die erste Fläche 11 entgegen der Steckrichtung 7 von der Ankerhülse 1 formschlüssig festhaltbar ist.

Die Ankerhülse 1 und dadurch die hülsenförmige Aufnahme 5 haben einen rechteckigen Querschnitt 12 und sind so geformt, dass in einem Zustand, in dem der Schutzgeländerhalter 2 in die hülsenförmige Aufnahme 5 der einbetonierten Ankerhülse 1 gesteckt ist, ein in die hülsenförmige Aufnahme 5 der einbetonierten Ankerhülse 1 gesteckter eckiger Abschnitt 13 des Schutzgeländerhalters 2 in die Drehrichtungen 8 quer zur Steckrichtung 7 von der Ankerhülse 1 formschlüssig festhaltbar ist.

Das Formschlusselement 6 hat eine zweite Kante 14 und eine zweite Fläche 15, die sich quer zu den Drehrichtungen 8 erstrecken, sodass in einem Zustand, in dem der Schutzgeländerhalter 2 in die hülsenförmige Aufnahme 5 der einbetonierten Ankerhülse 1 gesteckt ist, der Schutzgeländerhalter 2 durch die zweite Kante 14 bzw. die zweite Fläche 15 in die Drehrichtungen 8 quer zur Steckrichtung 7 von der Ankerhülse 1 formschlüssig festhaltbar ist.

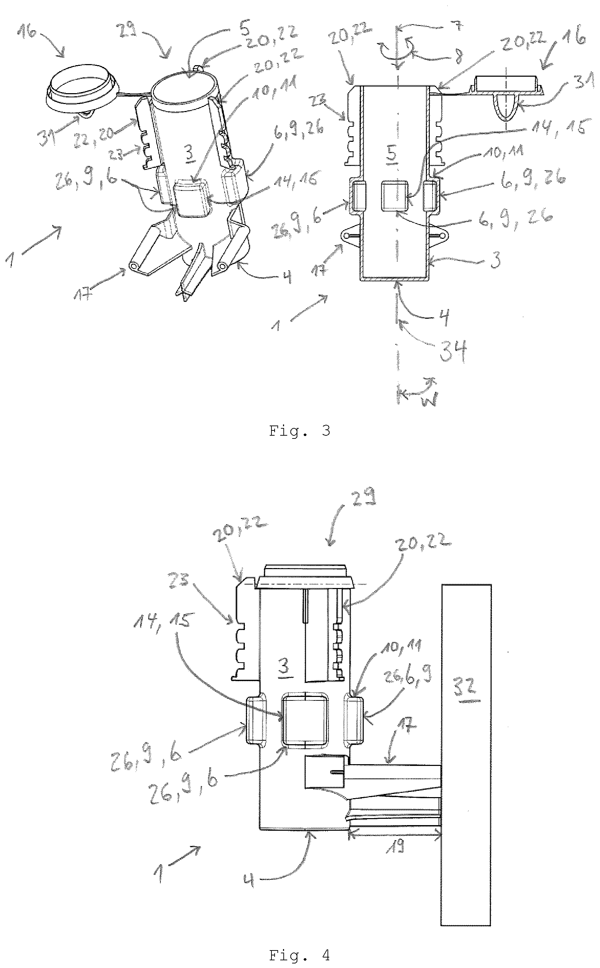

An der Ankerhülse 1 ist ein Deckel 16 zum Schliessen der Ankerhülse 1, sodass die Ankerhülse 1 beidseitig geschlossen ist, befestigt, wobei am Deckel 16 eine sich quer und orthogonal vom Deckel weg erstreckende Schlaufe 31 angeformt (in Figuren 2 und 3 nicht gezeigt) ist.

An der Ankerhülse 1 sind hülsenförmige Nagelhalter 17 zum Halten von Nägeln und Befestigen der Ankerhülse 1 an einer Schalung 32 durch Annageln mittels von den hülsenförmigen Nagelhaltern 17 gehaltener Nägel, so ausgebildet, dass in einem Zustand, in dem die Nägel von den hülsenförmigen Nagelhaltern 17 gehalten sind, die Nägel sich quer und orthogonal zur Steckrichtung 7 erstrecken.

Die hülsenförmigen Nagelhalter 17 sind als Distanzhalter ausgebildet, sodass die hülsenförmige Aufnahme 5 in einem Zustand, in dem die Ankerhülse 1 mittels von den hülsenförmigen Nagelhaltern 17 gehaltener Nägel an einer Schalung 32 angenagelt ist (siehe Figur 2), die Ankerhülse 1 mit einem Abstand 19 von mindestens 5 cm zur Schalung 32 an der Schalung befestigt ist.

An der Ankerhülse 1 sind hülsenförmige Armierungseisenhalter 24 zum Halten von Armierungseisen und Erhöhen der Ausreissfestigkeit der einbetonierten Ankerhülse 1 so ausgebildet, dass in einem Zustand, in dem die Armierungseisen von den hülsenförmigen Armierungseisenhaltern 24 gehalten sind, die Armierungseisen sich quer und orthogonal zur Steckrichtung 7 erstrecken.

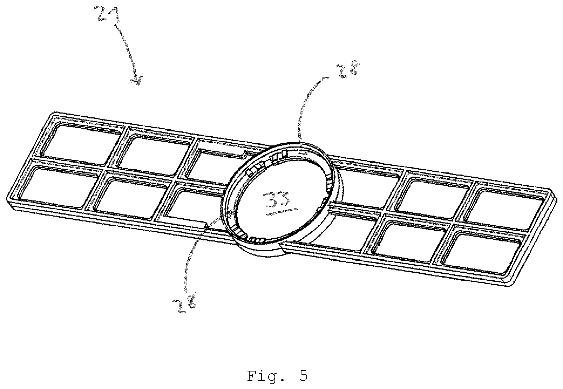

Aussen an der Ankerhülse 1 ist eine Haltevorrichtung 20 ausgebildet, die dazu ausgelegt ist, ein Montagehilfsmittel 21 (in Figur 5 gezeigt) zur Montage der Ankerhülse 1 an einer Bewehrung und zur Erhöhung der Ausreissfestigkeit der einbetonierten Ankerhülse 1 formschlüssig an der Ankerhülse 1 zu halten.

Die Haltevorrichtung 20 weist Stege 22 auf, die sich in Steckrichtung 7 und von der Ankerhülse 1 weg erstrecken und Nuten 23 in den Stegen 22, wobei die Nuten 23 dazu ausgelegt sind, das Montagehilfsmittel 21 in Steckrichtung 7 und entgegen der Steckrichtung 7 formschlüssig zu halten.

Die Ankerhülse 1 weist ein weiteres einzubetonierendes Formschlusselement 26 auf. Das einzubetonierende Formschlusselement 6 und das weitere einzubetonierende Formschlusselement 26 weisen in Bezug auf die Mittenachse 34 der hülsenförmigen Aufnahme 5 einen Winkelabstand W von 90° zueinander auf.

Die Merkmale der in den Figuren 3 und 4 gezeigten Ankerhülsen sind in analoger Weise an den Ankerhülsen der Figuren 1 und 2 ausgebildet, entsprechend in den Figuren 1 und 2 gezeigt und oben beschrieben. Die Beschreibung dieser Merkmale für die Ankerhülsen der Figuren 1 und 2 gilt in analoger Weise für die Ankerhülsen der Figuren 3 und 4. Im Unterschied zu den Ankerhülsen 1 der Figuren 1 und 2, haben die in den Figuren 3 und 4 gezeigten Ankerhülsen 1 und dadurch deren hülsenförmige Aufnahmen 5 jeweils einen runden Querschnitt.

Figur 5 zeigt ein von der Ankerhülse 1 formschlüssig haltbares Montagehilfsmittel 21. In einem Zustand, in dem das Montagehilfsmittel 21 von einer Ankerhülse 1 gehalten ist, dient das Montagehilfsmittel 21 der Montage der Ankerhülse 1 an einer Bewehrung und der Erhöhung der Ausreissfestigkeit der einbetonierten Ankerhülse 1.

Das Montagehilfsmittel ist plattenförmig mit einem Loch 33 und am Lochrand angeformten ringsegementförmigen Elementen 28, welche in den Nuten 23 einer Ankerhülse 1 in Steckrichtung 7 und entgegen der Steckrichtung 7 formschlüssig haltbar sind.

Das Loch 33 bildet eine Aufnahme für eine Ankerhülse 1, durch die die Ankerhülse 1 steckbar ist, sodass das Montagehilfsmittel 21 aussen an der Ankerhülse 1 von der Haltevorrichtung 20 formschlüssig haltbar ist.

## Patentansprüche

1. Ankerhülse (1) zum Einbetonieren, die dazu ausgelegt ist im einbetonierten Zustand einen eine Eingriffsvorrichtung (27) aufweisenden Schutzgeländerhalter (2) festzuhalten, mit
o einer geschlossenen Ankerhülsenwand (3),
o einem Ankerhülsenboden (4), der die Ankerhülse (1) einseitig schliesst, und
o einer hülsenförmigen Aufnahme (5) innerhalb der Ankerhülse (1),
wobei die Ankerhülse (1) dazu ausgelegt und so geformt ist, dass der Schutzgeländerhalter (2) in einer Steckrichtung (7) in die hülsenförmige Aufnahme (5) der einbetonierten Ankerhülse (1) steckbar ist,
**dadurch gekennzeichnet, dass**
die hülsenförmige Aufnahme (5) ein einzubetonierendes Formschlusselement (6) aufweist, das dazu ausgelegt und so geformt ist, dass in einem Zustand, in dem der Schutzgeländerhalter (2) in die hülsenförmige Aufnahme (5) der einbetonierten Ankerhülse (1) gesteckt ist, der Schutzgeländerhalter (2) entgegen der Steckrichtung (7) von der Ankerhülse (1) durch ein Zusammenwirken der Eingriffsvorrichtung (27) mit dem Formschlusselement (6) formschlüssig festhaltbar ist.

2. Ankerhülse (1) nach Anspruch 1, **dadurch gekennzeichnet, dass** die Ankerhülse (1) ein Spritzgussteil ist, das durch Spritzgiessen in einer Spritzgussform mit einem Einfallkern hergestellt ist, wobei die hülsenförmige Aufnahme (5) und das einzubetonierende Formschlusselement (6) vom Einfallkern geformt sind und die Ankerhülse (1) einstückig, insbesondere und nahtlos, ausgebildet ist.

3. Ankerhülse (1) nach einem der Ansprüche 1 bis 2, **dadurch gekennzeichnet, dass** in einem Zustand, in dem der Schutzgeländerhalter (2) in die hülsenförmige Aufnahme (5) der einbetonierten Ankerhülse (1) gesteckt ist, der Schutzgeländerhalter (2) in Drehrichtungen (8) quer zur Steckrichtung (7) von der Ankerhülse (1) formschlüssig festhaltbar ist.

4. Ankerhülse (1) nach einem der Ansprüche 1 bis 3, **dadurch gekennzeichnet, dass** ein, insbesondere vom Ankerhülsenboden (4) und vom dem Ankerhülsenboden (4) abgewandten Ankerhülsenende (29) beabstandeter, Abschnitt der geschlossenen Ankerhülsenwand (3) zum einzubetonierenden Formschlusselement (6) geformt ist.

5. Ankerhülse (1) nach einem der Ansprüche 1 bis 4, **dadurch gekennzeichnet, dass** das Formschlusselement (6) eine, insbesondere rechteckige, Ausbuchtung (9) ist, die sich quer zur Steckrichtung (7) nach aussen erstreckt.

6. Ankerhülse (1) nach einem der Ansprüche 1 bis 5, **dadurch gekennzeichnet, dass** das Formschlusselement (6) eine erste Kante (10), insbesondere erste Fläche (11), die sich quer zur Steckrichtung (7) erstreckt, aufweist, sodass in einem Zustand, in dem der Schutzgeländerhalter (2) in die hülsenförmige Aufnahme (5) der einbetonierten Ankerhülse (1) gesteckt ist, der Schutzgeländerhalter (2) durch die erste Kante (10), insbesondere die erste Fläche (11), entgegen der Steckrichtung (7) von der Ankerhülse (1) formschlüssig festhaltbar ist.

7. Ankerhülse (1) nach einem der Ansprüche 3 bis 6, **dadurch gekennzeichnet, dass** die Ankerhülse (1) und dadurch die hülsenförmige Aufnahme (5) einen eckigen, insbesondere rechteckigen oder quadratischen, Querschnitt (12) hat und so geformt ist, dass in einem Zustand, in dem der Schutzgeländerhalter (2) in die hülsenförmige Aufnahme (5) der einbetonierten Ankerhülse (1) gesteckt ist, ein in die hülsenförmige Aufnahme (5) der einbetonierten Ankerhülse (1) gesteckter eckiger, insbesondere rechteckiger oder quadratischer,
Abschnitt (13) des Schutzgeländerhalters (2) in die Drehrichtungen (8) quer zur Steckrichtung (7) von der Ankerhülse (1) formschlüssig festhaltbar ist.

8. Ankerhülse (1) nach einem der Ansprüche 3 bis 7, **dadurch gekennzeichnet, dass** das Formschlusselement (6) eine zweite Kante (14), insbesondere zweite Fläche (15), die sich quer zu den Drehrichtungen (8) erstreckt aufweist, sodass in einem Zustand, in dem der Schutzgeländerhalter (2) in die hülsenförmige Aufnahme (5) der einbetonierten Ankerhülse (1) gesteckt ist, der Schutzgeländerhalter (2) durch die zweite Kante (14), insbesondere die zweite Fläche (15), in die Drehrichtungen (8) quer zur Steckrichtung (7) von der Ankerhülse (1) formschlüssig festhaltbar ist.

9. Ankerhülse (1) nach einem der Ansprüche 1 bis 6 oder 8, **dadurch gekennzeichnet, dass** die Ankerhülse (1) und dadurch die hülsenförmige Aufnahme (5) einen runden Querschnitt (12) hat.

10. Ankerhülse (1) nach einem der Ansprüche 1 bis 9, **dadurch gekennzeichnet, dass** an der Ankerhülse (1) ein Deckel (16) zum Schliessen der Ankerhülse (1), sodass die Ankerhülse (1) beidseitig geschlossen ist, befestigt ist, insbesondere wobei am Deckel (16) eine sich quer, insbesondere orthogonal, vom Deckel (16) weg erstreckende Schlaufe (31) angeformt ist.

11. Ankerhülse (1) nach einem der Ansprüche 1 bis 10, **dadurch gekennzeichnet, dass** an der Ankerhülse (1) hülsenförmige Nagelhalter (17) zum Halten von Nägeln und Befestigen der Ankerhülse (1) an einer Schalung (32) durch Annageln mittels von den hülsenförmigen Nagelhaltern (17) gehaltener Nägel, so ausgebildet sind, dass in einem Zustand, in dem die Nägel von den hülsenförmigen Nagelhaltern (17) gehalten sind, die Nägel sich quer, insbesondere orthogonal, zur Steckrichtung (7) erstrecken.

12. Ankerhülse (1) nach Anspruch 11, **dadurch gekennzeichnet, dass** die hülsenförmigen Nagelhalter (17) des Weiteren als Distanzhalter ausgebildet sind, sodass die hülsenförmige Aufnahme (5) in einem Zustand, in dem die Ankerhülse (1) mittels von den hülsenförmigen Nagelhaltern (17) gehaltener Nägel an einer Schalung (32) angenagelt ist, die Ankerhülse (1) mit einem Abstand (19) von mindestens 5 cm zur Schalung (32) an der Schalung (32) befestigt ist.

13. Ankerhülse (1) nach einem der Ansprüche 1 bis 12, **dadurch gekennzeichnet, dass** an der Ankerhülse (1) hülsenförmige Armierungseisenhalter (24) zum Halten von Armierungseisen und Erhöhen der Ausreissfestigkeit der einbetonierten Ankerhülse (1) so ausgebildet sind, dass in einem Zustand, in dem die Armierungseisen von den hülsenförmigen Armierungseisenhaltern (24) gehalten sind, die Armierungseisen sich quer, insbesondere orthogonal, zur Steckrichtung (7) erstrecken.

14. Ankerhülse (1) nach einem der Ansprüche 1 bis 13, **dadurch gekennzeichnet, dass** aussen an der Ankerhülse (1) eine Haltevorrichtung (20) ausgebildet ist, die dazu ausgelegt ist ein Montagehilfsmittel (21) zur Montage der Ankerhülse (1) an einer Bewehrung und zur Erhöhung der Ausreissfestigkeit der einbetonierten Ankerhülse (1) formschlüssig an der Ankerhülse (1) zu halten.

15. Ankerhülse (1) nach Anspruch 14, **dadurch gekennzeichnet, dass** die Haltevorrichtung (20) Stege (22), die sich in Steckrichtung (7) und von der Ankerhülse weg erstrecken und Nuten (23) in den Stegen (22) aufweist, wobei die Nuten (23) dazu ausgelegt sind, das Montagehilfsmittel (21) in Steckrichtung (7) und entgegen der Steckrichtung (7) formschlüssig zu halten.

16. Ankerhülse (1) nach einem der Ansprüche 14 bis 15, **dadurch gekennzeichnet, dass** das Montagehilfsmittel (21) von der Haltevorrichtung (20) formschlüssig an der Ankerhülse (1) gehalten ist.

17. Ankerhülse (1) nach Anspruch 15 und 16, **dadurch gekennzeichnet, dass** das Montagehilfsmittel (21) plattenförmig ist mit einem Loch (33) und am Lochrand angeformten ringsegementförmigen Elementen (28), welche in den Nuten (23) in Steckrichtung (7) und entgegen der Steckrichtung (7) formschlüssig gehalten sind.

18. Ankerhülse (1) nach einem der Ansprüche 1 bis 17, **dadurch gekennzeichnet, dass** die Ankerhülse (1) ein weiteres einzubetonierendes Formschlusselement (26) aufweist, und das einzubetonierende Formschlusselement (6) und das weitere einzubetonierende Formschlusselement (26) in Bezug auf die Mittenachse der hülsenförmigen Aufnahme (5) einen Winkelabstand W, insbesondere von 90°, oder von 120°, oder von 180°, zueinander aufweisen.

19. Spritzgussverfahren zum Herstellen einer Ankerhülse (1) nach einem der Ansprüche 1 bis 18, mit den Schritten
o Bereitstellen einer die Ankerhülse (1) formenden Spritzgussform mit einem Einfallkern, und
o Spritzgiessen der Ankerhülse (1),
**dadurch gekennzeichnet, dass**
die hülsenförmige Aufnahme (5) und das einzubetonierende Formschlusselement (6) vom Einfallkern geformt werden, sodass die Ankerhülse (1) einstückig, insbesondere und nahtlos, ausgebildet ist.

20. Ankersystem mit einer Ankerhülse (1) nach einem der Ansprüche 1 bis 18 und einem Schutzgeländerhalter (2), dadurch gekennezichnet, dass der Schutzgeländerhalter (2) eine betätigbare Eingriffsvorrichtung (27) mit einem Eingriffselement (30), das durch Eingreifen am Formschlusselement (6) mit diesem zusammenwirkt, aufweist, sodass der von der einbetonierten Ankerhülse (1) formschlüssig festgehaltene Schutzgeländerhalter (2) durch Betätigen der Eingriffsvorrichtung (27) von der Ankerhülse (1) trennbar ist.

21. Ankerhülse (1) zum Einbetonieren, die dazu ausgelegt ist im einbetonierten Zustand einen eine Eingriffsvorrichtung (27) aufweisenden Schutzgeländerhalter (2) festzuhalten, mit
o einer geschlossenen Ankerhülsenwand (3),
o einem Ankerhülsenboden (4), der die Ankerhülse (1) einseitig schliesst, und
o einer hülsenförmigen Aufnahme (5) innerhalb der Ankerhülse (1),
wobei die Ankerhülse (1) dazu ausgelegt und so geformt ist, dass der Schutzgeländerhalter (2) in einer Steckrichtung (7) in die hülsenförmige Aufnahme (5) der einbetonierten Ankerhülse (1) steckbar ist,
**dadurch gekennzeichnet, dass**
die Ankerhülse (1) ein Spritzgussteil ist, das durch Spritzgiessen in einer Spritzgussform mit einem Einfallkern hergestellt ist, wobei die hülsenförmige Aufnahme (5) vom Einfallkern geformt ist und die Ankerhülse (1) einstückig, insbesondere und nahtlos ausgebildet ist.

22. Ankerhülse (1) zum Einbetonieren, die dazu ausgelegt ist im einbetonierten Zustand einen eine Eingriffsvorrichtung (27) aufweisenden Schutzgeländerhalter (2) festzuhalten, mit
o einer geschlossenen Ankerhülsenwand (3),
o einem Ankerhülsenboden (4), der die Ankerhülse (1) einseitig schliesst, und
o einer hülsenförmigen Aufnahme (5) innerhalb der Ankerhülse (1),
wobei die Ankerhülse (1) dazu ausgelegt und so geformt ist, dass der Schutzgeländerhalter (2) in einer Steckrichtung (7) in die hülsenförmige Aufnahme (5) der einbetonierten Ankerhülse (1) steckbar ist,
**dadurch gekennzeichnet, dass** aussen an der Ankerhülse (1) ein Montagehilfsmittel (21) zur Montage der Ankerhülse (1) an einer Bewehrung und zur Erhöhung der Ausreissfestigkeit der einbetonierten Ankerhülse (1) formschlüssig an der Ankerhülse (1) gehalten ist.
